# EUROPÄISCHE PATENTSCHRIFT

(11) **EP 3 052 345 B1**
(45) Veröffentlichungstag und Bekanntmachung des Hinweises auf die Patenterteilung: **01.08.2018**
(21) Anmeldenummer: 14772351.4
(22) Anmeldetag: 25.09.2014
(51) Int. Cl.: B60R 16/027, H01R 35/02

(54) **VERBINDUNGSVORRICHTUNG FÜR EIN LENKRAD EINES KRAFTFAHRZEUGS, KRAFTFAHRZEUG UND VERFAHREN ZUM MONTIEREN EINES LENKRADS AN EINER LENKSÄULE**
CONNECTING DEVICE FOR A STEERING WHEEL OF A MOTOR VEHICLE, MOTOR VEHICLE AND METHOD FOR MOUNTING A STEERING WHEEL ON A STEERING COLUMN
DISPOSITIF DE RACCORDEMENT POUR VOLANT D'UN VÉHICULE AUTOMOBILE, VÉHICULE AUTOMOBILE ET PROCÉDÉ DE MONTAGE D'UN VOLANT SUR UNE COLONNE DE DIRECTION

(30) Priorität: 02.10.2013 DE 102013016507
(43) Veröffentlichungstag der Anmeldung: 10.08.2016
(73) Patentinhaber: Valeo Schalter und Sensoren GmbH, 74321 Bietigheim-Bissingen (DE)
(72) Erfinder: ULLMANN, Tim, 74321 Bietigheim-Bissingen (DE); JAECKLE, Daniela, 74321 Bietigheim-Bissingen (DE); SCHWARZ, Viktoria, 74321 Bietigheim-Bissingen (DE)
(86) Internationale Anmeldenummer: PCT/EP2014/070431
(87) Internationale Veröffentlichungsnummer: WO 2015/049145

(56) Entgegenhaltungen:
- EP-A2- 1 182 090
- EP-A2- 2 522 562
- EP-B1- 1 674 343
- DE-A1- 4 129 450
- DE-T2- 69 608 537
- JP-A- H07 282 935
- JP-A- H08 138 818
- JP-A- H10 275 669
- JP-A- 2001 347 904
- JP-A- 2009 081 029
- JP-A- 2011 119 247
- US-A1- 2012 011 959

## Beschreibung

Die Erfindung betrifft eine elektrische Verbindungsvorrichtung zum Übertragen von elektrischen Signalen an und/oder von einem Lenkrad eines Kraftfahrzeugs, mit einem ortsfesten Bauteil zur ortsfesten Installation in dem Kraftfahrzeug, mit einem an dem ortsfesten Bauteil drehbar gelagerten Nabenteil zum Verbinden mit dem Lenkrad, und mit einem an einem Lagerteil bewegbar gelagerten Verriegelungselement, welches bei dem Verbinden des Nabenteils mit dem Lenkrad aus einer Montagestellung gegen eine Federkraft eines Federelements in eine Betriebsstellung bewegbar ist. Während in der Montagestellung ein Sperrriegel des Verriegelungselements die Drehung des Nabenteils gegenüber dem ortsfesten Bauteil blockiert, ist die Drehung des Nabenteils in der Betriebsstellung des Verriegelungselements freigegeben. Die Erfindung betrifft außerdem ein Kraftfahrzeug mit einer solchen Verbindungsvorrichtung.

Elektronische Lenksäulenmodule für Kraftfahrzeuge sind bereits aus dem Stand der Technik bekannt. Solche Lenksäulenmodule beinhalten üblicherweise eine Verbindungsvorrichtung, welche zum Übertragen von elektrischen Signalen zwischen ortsfesten Komponenten einerseits und dem Lenkrad andererseits dienen. Die bekannten Lenksäulenmodule umfassen üblicherweise ein ortsfestes Bauteil bzw. ein Gehäuse, welches ortsfest in dem Kraftfahrzeug angebracht wird, etwa an einem karosseriefest angeordneten Mantel der Lenksäule, in welchem die Lenkwelle drehbar gelagert ist. An dem ortsfesten Bauteil ist ein Nabenteil drehbar gelagert, welches an das Lenkrad drehfest angebunden werden kann. In dem ortsfesten Bauteil kann beispielsweise eine Wickelfeder bzw. ein so genannter Flachleiter angeordnet sein, über welche/welchen elektrische Signale - etwa elektrische Versorgungsspannungen - zwischen Einrichtungen einerseits, die sich im Lenkrad befinden, und Geräten andererseits übertragen werden, die ortsfest im Fahrzeug angeordnet sind. Über eine derartige Wickelfeder wird beispielsweise eine elektrische Heizung im Lenkrad mit elektrischer Energie versorgt. Des Weiteren kann auch ein Airbag im Lenkrad über die Wickelfeder angesteuert werden. Ein weiteres Beispiel stellen in das Lenkrad integrierte Bedienelemente dar, welche über die Wickelfeder mit Steuergeräten elektrisch verbunden sind, die sich außerhalb des Lenkrads befinden. Die Wickelfeder beinhaltet dabei typischerweise mehrere elektrische Leitungen, welche elektrisch voneinander isoliert sind. Die Wickelfeder selbst stellt ein flaches, federndes Kabel dar - ein Flachkabel.

Die Wickelfeder ist - wie bereits ausgeführt - üblicherweise in dem ortsfesten Bauteil untergebracht, welches ein Gehäuse darstellt. Die Wickelfeder ist dabei mit elektrischen Kontaktelementen versehen, die als Anschlüsse an dem Nabenteil bereitgestellt sind, über welche die Wickelfeder an die lenkradseitigen Komponenten elektrisch angebunden wird. Ergänzend zu einer derartigen Wickelfeder kann in dem Lenksäulenmodul auch ein Lenkwinkelsensor zur Messung des aktuellen Lenkwinkels und/oder ein Drehmomentsensor angeordnet sein, welcher zur Erfassung des aktuellen Drehmoments dient, welches auf die Lenkwelle aufgebracht wird. An dem Lenksäulenmodul können des Weiteren Lenkstockschalter angebracht sein.

Ein Lenksäulenmodul ist beispielsweise aus der EP 1 462 296 A2 bekannt. Die Ausgestaltung einer Lenksäule mit einem ortsfesten Mantel und einer drehbar in dem Mantel gelagerten Drehwelle ist aus der EP 1 410 971 A2 bekannt.

Bei der Montage des Lenkrads wird dieses an das genannte Nabenteil des Lenksäulenmoduls drehbar angebunden. Dies bedeutet, dass das Lenkrad derart an der Lenksäule montiert und hierbei auf die Lenkwelle axial aufgesetzt wird, dass die Drehung des Lenkrads gleichzeitig auch eine Drehung des Nabenteils des Lenksäulenmoduls bewirkt. Die Drehbewegung wird dabei üblicherweise über Mitnehmerelemente übertragen. Ein lenkradseitiges Mitnehmerelement steht in Wirkverbindung mit einem Mitnehmerelement des Nabenteils. Eines der Mitnehmerelemente kann in Form eines stiftartigen Bolzens ausgebildet sein; das andere Mitnehmerelement kann als eine Hülse mit einer Aufnahme bereitgestellt sein, in welche der Bolzen bei der Montage des Lenkrads aufgenommen bzw. eingesteckt wird, sodass die genannte Wirkverbindung hergestellt wird.

Bei der Montage des Lenkrads soll sichergestellt werden, dass die Drehbewegung des Nabenteils relativ zum Gehäuse bzw. zum ortsfesten Bauteil so lange blockiert wird, bis das Lenkrad mit dem Nabenteil verbunden wird. Zu diesem Zwecke wird im Stand der Technik bereits ein Verriegelungselement eingesetzt, mittels welchem die Drehbewegung des Nabenteils mechanisch verhindert bzw. verriegelt wird. Eine solche Lösung ist beispielsweise aus der EP 1 674 343 B1 bekannt. Bei der Montage des Lenkrads wird das Verriegelungselement in eine Betriebsstellung bzw. eine Freigabestellung gebracht, in welcher die Drehbewegung des Nabenteils relativ zum Gehäuse freigegeben wird. Das Verriegelungselement wird hier gegen die Federkraft einer Druckfeder bewegt. Als nachteilig an diesem Stand der Technik ist der Umstand anzusehen, dass aufgrund der Ausgestaltung des Federelements ein relativ großer Federweg benötigt wird, wodurch insgesamt relativ viel Bauraum beansprucht wird. Dieser steht jedoch insbesondere im Bereich eines Lenkrads nur eingeschränkt zur Verfügung.

Eine Verbindungsvorrichtung der eingangs genannten Gattung ist außerdem aus der DE 696 08 537 T2 als bekannt zu entnehmen.

Bei der Montage des Lenkrads wird auf die Lenksäule zunächst das Lenksäulenmodul bzw. die Verbindungsvorrichtung montiert und dann das Lenkrad aufgesetzt. Die Montage des Lenkrads erfolgt also in axialer Richtung, d.h. das Lenkrad wird axial auf die Lenksäule aufgesteckt bzw. aufgesetzt. Beim Aufsetzen des Lenkrads wird die axiale Stirnseite einer Nabe des Lenkrads in Kontakt mit dem Verriegelungselement der Verbindungsvorrichtung gebracht und drückt das Verriegelungselement in die Betriebsstellung, in welcher die Drehung des Nabenteils freigegeben wird. Das Verriegelungselement wird dabei durch die axiale Stirnseite der Nabe des Lenkrads kontinuierlich in der Betriebsstellung gehalten. Es hat sich nun herausgestellt, dass es im Betrieb des Kraftfahrzeugs zu axialen Bewegungen des Lenkrads kommen kann, welche wiederum zu einer Relativbewegung des Verriegelungselements bezüglich des Lenkrads führen. Dies verursacht zusätzliche Geräusche im Betrieb, und diese Geräuschentwicklung verringert wiederum den Fahrkomfort.

Entsprechendes gilt auch für die Lösung gemäß der EP 1 182 090 A2. Bei dieser Verbindungsvorrichtung wird ein Verriegelungselement von einem durch Federkraft vorgespannten Stößel, bei der Montage eines Lenkrades, parallel zur Rotationsachse des Lenkrades verschoben. Dadurch wird die Drehung des Nabenteils relativ zum ortsfesten Bauteil freigegeben. Auch hier kann es im Betrieb des Kraftfahrzeugs zu Relativbewegungen des Verriegelungselements bezüglich des Lenkrades kommen, was wiederum Geräusche verursacht.

Eine gattungsgemäße Verbindungsvorrichtung ist auch aus der JP 2001347904 bekannt. Das Dokument offenbart einen Verriegelungsmechanismus mit einem Stößel und einem Verriegelungselement. Das Verriegelungselement ist schwenkbar mit seinem mittleren Bereich an einem ersten Gehäuseteil gelagert und an einem Ende mit dem Stößel bewegungsgekoppelt. Bei Druck auf den Stößel wird das Verriegelungselement aus einer Blockieraufnahme eines zweiten Gehäuseteils bewegt, so dass die Verriegelung aufgehoben ist und beide Gehäuseteile relativ zueinander drehbar sind.

Es ist Aufgabe der Erfindung die Geräuschentwicklung bei einer Verbindungsvorrichtung der eingangs genannten Gattung im Vergleich zum Stand der Technik zu reduzieren und dabei weiterhin eine besonders kompakte und Bauraum sparende Verbindungsvorrichtung zu ermöglichen.

Diese Aufgabe wird erfindungsgemäß durch eine Verbindungsvorrichtung, sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Verbindungsvorrichtung ist zum Übertragen von elektrischen Signalen an und/oder von einem Lenkrad eines Kraftfahrzeugs ausgebildet und umfasst ein ortsfestes Bauteil zur ortsfesten Installation bzw. Montage in dem Kraftfahrzeug (nämlich insbesondere an einer Lenksäule) sowie ein an dem ortfesten Bauteil drehbar gelagertes Nabenteil, welches an das Lenkrad drehfest angekoppelt werden kann. Die Verbindungsvorrichtung umfasst des Weiteren ein an einem Lagerteil bewegbar, insbesondere schwenkbar, gelagertes Verriegelungselement, welches bei dem Verbinden des Nabenteils mit dem Lenkrad, insbesondere beim axialen Aufsetzen des Lenkrads auf die Lenksäule, aus einer Montagestellung gegen eine Federkraft eines Federelements in eine Betriebsstellung bewegbar ist. In der Montagestellung des Verriegelungselements blockiert ein Sperrriegel des Verriegelungselements die Drehung des Nabenteils relativ zum ortsfesten Bauteil. Demgegenüber ist in der Betriebsstellung des Verriegelungselements die Drehung des Nabenteils freigegeben. Erfindungsgemäß ist vorgesehen, dass die Verbindungsvorrichtung einen relativ zum Verriegelungselement bewegbar gelagerten Stößel aufweist, welcher bei dem Verbinden des Nabenteils mit dem Lenkrad, insbesondere beim Aufsetzen des Lenkrads auf die Lenksäule, das Verriegelungselement in die Betriebsstellung verbringt, in welcher das Verriegelungselement durch den Stößel in einem Abstand zu dem Lenkrad bzw. zur Nabe des Lenkrads gehalten ist.

Durch einen derartigen Stößel, mittels welchem das Verriegelungselement in der Betriebsstellung in einem Abstand zum Lenkrad gehalten wird, kann die Geräuschentwicklung im Vergleich zum Stand der Technik zuverlässig reduziert werden. Das Verriegelungselement befindet sich nämlich nicht mehr in Kontakt mit dem Lenkrad, sodass auch axiale Bewegungen des Lenkrads im Betrieb des Kraftfahrzeugs zu keiner Geräuschentwicklung führen. Der Stößel bewirkt also, dass das Verriegelungselement in seiner entriegelten Stellung bzw. in der Betriebsstellung einen Abstand zum Lenkrad aufweist, sodass ein Kontakt zwischen Verriegelungselement und Lenkrad und eine dadurch verursachte Geräuschbildung zuverlässig vermieden wird.

Die Verbindungsvorrichtung stellt vorzugsweise ein Lenksäulenmodul oder einen Teil eines solchen Lenksäulenmoduls dar, welches an einer Lenksäule des Kraftfahrzeugs montiert wird und zur Übertragung von elektrischen Signalen zwischen dem Lenkrad einerseits und ortsfest im Kraftfahrzeug angeordneten Einrichtungen andererseits dient. Zu diesem Zwecke kann die Verbindungsvorrichtung eine Wickelfeder beinhalten, welche insbesondere in dem ortsfesten Bauteil angeordnet ist. Es kann auch vorgesehen sein, dass in die Verbindungsvorrichtung bzw. das Lenksäulenmodul auch zumindest ein Sensor, insbesondere ein Lenkwinkelsensor und/oder ein Drehmomentsensor, integriert ist. Allgemein gesagt wird unter der Verbindungsvorrichtung bzw. dem Lenksäulenmodul ein elektrisches Modul verstanden, welches an der Schnittstelle zwischen dem drehbaren Lenkrad und den ortsfest im Fahrzeug angeordneten Bauteilen eingesetzt wird.

Bevorzugt ist das ortsfeste Bauteil in Form eines Gehäuses ausgebildet, in welchem die genannte Wickelfeder untergebracht ist, welche zur Übertragung der elektrischen Signale dient.

In einer Ausführungsform ist vorgesehen, dass bei dem Verbinden des Nabenteils mit dem Lenkrad, insbesondere beim Aufsetzen des Lenkrads auf die Lenksäule, das Verriegelungselement zunächst streckenweise unter Kontakt mit dem Lenkrad mittels des Lenkrads, insbesondere mittels der Nabe des Lenkrads, in eine Zwischenstellung bewegt wird, in welcher der Stößel in Kontakt mit dem Lenkrad gebracht wird. Das Verriegelungselement wird anschließend mittels des Stößels von der Zwischenstellung in die Betriebsstellung bewegt, in welcher das Verriegelungselement keinen Kontakt mehr mit dem Lenkrad aufweist. In der Zwischenstellung wird der Stößel dabei vorzugsweise in Kontakt und somit in Berührung mit einem anderen Bereich des Lenkrads als das Verriegelungselement selbst gebracht. Der Stößel kann insbesondere nicht mit der axialen Stirnseite der Nabe des Lenkrads in Kontakt gebracht werden, sondern mit einer Rückseite eines die Nabe tragenden Lenkradtopfs. Diese Rückseite ist üblicherweise gefräst und poliert bzw. mit einer Beschichtung versehen, sodass hier ein Kontakt mit dem Stößel zu keiner erhöhten Geräuschentwicklung führt. Dadurch, dass der Stößel direkt durch das Lenkrad betätigt wird, erübrigt sich der Einsatz von weiteren Zwischenelementen, und es kann somit insgesamt eine besonders kompakte und Bauraum sparende sowie bauteilreduzierte Verbindungsvorrichtung geschaffen werden.

Kennzeichnend für die Erfindung ist, dass das Verriegelungselement zwischen der Montagestellung und der Betriebsstellung schwenkbar an dem Lagerteil gelagert ist. Auch durch diese schwenkbare Lagerung des Verriegelungselements kann insgesamt eine kompakte und Bauraum sparende Verbindungsvorrichtung geschaffen werden, da keine großen Wegstrecken durch das Verriegelungselement zurückgelegt werden müssen. Außerdem kann dadurch eine zuverlässige Verriegelung und Entriegelung der Bewegung des Nabenteils relativ zum ortsfesten Bauteil ermöglicht werden.
Es erweist sich außerdem als besonders vorteilhaft, wenn der Stößel an und/oder in einem Führungsteil verschiebbar gelagert ist. Der Stößel kann dabei in axialer Richtung verschiebbar gelagert sein, sodass insbesondere eine lineare Bewegung des Stößels in axialer Richtung eine schwenkbare Bewegung des Verriegelungselements bewirkt. Auch bei einer schwenkbaren Lagerung des Verriegelungselements kann dadurch ein relativ großer Abstand zwischen dem Verriegelungselement und dem Lenkrad ermöglicht und somit die Geräuschentwicklung zuverlässig verhindert werden.

Der Stößel ist erfindungsgemäß länglich ausgeführt und somit insgesamt stiftartig ausgebildet. Der Stößel erstreckt sich dabei bevorzugt in axialer Richtung, sodass die Haupterstreckungsrichtung des Stößels in axialer Richtung orientiert ist. Die Bewegung des Stößels erfolgt also insgesamt im Wesentlichen entlang der axialen Richtung bzw. entlang der Haupterstreckungsrichtung des Stößels und somit entlang einer Drehachse des Nabenteils.

Besonders bevorzugt ist das Verriegelungselement an dem Stößel angelenkt. Auf diese Art und Weise kann die im Wesentlichen lineare Bewegung des Stößels zuverlässig in eine schwenkbare Bewegung des Verriegelungselements in die Betriebsstellung umgewandelt werden. Die Lenkachse, um welche der Stößel an dem Verriegelungselement angelenkt ist, erstreckt sich dabei bevorzugt parallel und in einem Abstand zu derjenigen Schwenkachse, um welche das Verriegelungselement an dem Lagerteil schwenkbar gelagert ist.

Wie bereits ausgeführt, ist der Stößel länglich ausgeführt und entlang seiner Haupterstreckungsrichtung bewegbar gelagert. Das Verriegelungselement weist erfindungsgemäß eine durchgängige Aussparung auf, durch welche sich der Stößel hindurcherstreckt. Dadurch kann der Bauraum in radialer Richtung bezüglich der Drehachse des Nabenteils sowie in Umfangsrichtung gespart werden.

Vorzugsweise ist das Federelement als Schenkelfeder ausgebildet, welche um einen, insbesondere kreiszylinderförmigen, Grundkörper des Verriegelungselements gewickelt ist. Ein erster Schenkel der Schenkelfeder kann an dem Verriegelungselement und ein zweiter Schenkel der Schenkelfeder an dem Lagerteil abgestützt sein. Durch eine derartige Ausgestaltung des Federelements als Schenkelfeder, deren erster Schenkel an dem Verriegelungselement selbst und zweiter Schenkel an dem Lagerteil fixiert sind, kann insgesamt eine kompakte und Bauraum sparende Verbindungsvorrichtung geschaffen werden. Einerseits fällt nämlich der Federweg des Federelements mit dem Schwenkweg des Verriegelungselements zusammen. Andererseits wird auch kein zusätzlicher Bauraum für das Federelement selbst benötigt, weil dieses um den

Grundkörper des Verriegelungselements selbst gewickelt ist. Insbesondere im Vergleich zu einer Druckfeder, wie sie im Stand der Technik eingesetzt wird, kann somit relativ viel

Bauraum, insbesondere in axialer Richtung, eingespart werden, der insbesondere im Bereich eines Lenkrads lediglich eingeschränkt zur Verfügung steht. Die Ausgestaltung des Federelements als Schenkelfeder hat außerdem den Vorteil, dass das Verriegelungselement aufgrund der Federkraft besonders sicher wieder in die Montagestellung gebracht werden kann, wenn das Lenkrad - etwa in einem Servicefall - abgenommen wird.

In einer Ausführungsform ist vorgesehen, dass das Lagerteil integral mit dem Nabenteil ausgebildet ist, sodass das Verriegelungselement direkt an dem Nabenteil schwenkbar gelagert ist bzw. das Lagerteil quasi durch einen Bereich des Nabenteils gebildet ist. Eine solche Anordnung des Verriegelungselements direkt an dem Nabenteil hat den Vorteil, dass das Verriegelungselement bei der Montage des Lenkrads leicht zugänglich ist und somit unmittelbar durch das Lenkrad betätigt werden kann, sodass die Bewegung des Verriegelungselements in die Betriebsstellung quasi automatisch beim Einsetzen des Lenkrads in das Nabenteil erfolgt.

Es kann auch vorgesehen sein, dass der Grundkörper des Verriegelungselements, um welchen die Schenkelfeder gewickelt ist, kreiszylinderförmig ausgebildet ist. Das Verriegelungselement kann dabei an dem Lagerteil um eine Zylinderlängsachse des zylindrischen Grundkörpers schwenkbar gelagert sein. Somit ist eine besonders stabile und betriebssichere Lagerung des Verriegelungselements an dem Lagerteil gewährleistet. Des Weiteren kann dadurch ein sicherer Sitz der Schenkelfeder an dem zylindrischen Grundkörper ermöglicht werden.

Das Lagerteil weist vorzugsweise eine Aufnahme auf, in welche der Grundkörper des Verriegelungselements eingesetzt ist. Der Grundkörper des Verriegelungselements ist somit in der Aufnahme des Lagerteils gleitend schwenkbar gelagert. Dies sorgt für eine robuste Lagerung des Verriegelungselements und folglich für eine entsprechend lange Lebensdauer der Verbindungsvorrichtung.

Das Lagerteil kann auch einen federnd ausgebildeten Haltearm aufweisen, welcher - insbesondere mit seinem freien Ende - an dem Grundkörper des Verriegelungselements anliegt und mittels welchem der Grundkörper somit in der Aufnahme gehalten ist. Dieser Haltearm ist vorzugsweise einstückig mit dem Lagerteil, und insbesondere einstückig mit dem Nabenteil, ausgebildet. Ein derartiger Haltearm sorgt dafür, dass das Verriegelungselement bzw. sein Grundkörper fest und stabil innerhalb der genannten Aufnahme gehalten werden kann. Der Haltearm drückt nämlich mit anderen Worten den Grundkörper des Verriegelungselements in Richtung zur Aufnahme hin, sodass insgesamt ein sicherer Sitz des Grundkörpers in der Aufnahme gewährleistet ist. Durch die federnde Ausgestaltung des Haltearms ist außerdem gewährleistet, dass das Verriegelungselement aus der Aufnahme zerstörungsfrei herausgenommen und somit von dem Lagerteil demontiert werden kann.

Also kann in einer Ausführungsform vorgesehen sein, dass das Verriegelungselement zerstörungsfrei lösbar an dem Lagerteil angeordnet ist. Gleiche Nabenteile können somit sowohl für Verbindungsvorrichtungen mit einem Verriegelungselement als auch für solche Vorrichtungen genutzt werden, die ohne ein Verriegelungselement auskommen.

Es erweist sich als vorteilhaft, wenn das Verriegelungselement einen von dem Grundkörper abstehenden Betätigungsabschnitt aufweist, welcher mittels des Lenkrads bei dem Verbinden des Nabenteils mit dem Lenkrad betätigbar ist. Der Betätigungsabschnitt kann beispielsweise in Form einer Lasche bereitgestellt sein, welche von dem Grundkörper absteht und sich insbesondere in einen zylindrischen Hohlraum des Nabenteils hineinerstreckt, in welchen das Lenkrad eingesetzt werden kann. Beim Einsetzen des Lenkrads in den Hohlraum des Nabenteils wird der Betätigungsabschnitt somit direkt durch das Lenkrad selbst berührt und so betätigt, dass das Verriegelungselement in die Betriebsstellung verschwenkt wird.

Der erste Schenkel der Schenkelfeder kann insbesondere an dem Betätigungsabschnitt oder aber an dem Sperrriegel selbst fixiert sein. Insbesondere ist der erste Schenkel der Schenkelfeder in eine Aussparung des Betätigungsabschnitts oder des Sperrriegels aufgenommen und somit fixiert. Der zweite Schenkel der Schenkelfeder kann wiederum an dem Nabenteil fixiert sein, beispielsweise in eine entsprechende Aussparung in dem Nabenteil aufgenommen sein.

Die Verriegelung der Drehung des Nabenteils relativ zum ortsfesten Bauteil wird insbesondere dadurch ermöglicht, dass der Sperrriegel des Verriegelungselements in der Montagestellung in eine Vertiefung eingreift und somit mit einer die Vertiefung begrenzenden Wand blockierend zusammenwirkt. Diese Vertiefung ist vorzugsweise in dem ortsfesten Bauteil ausgebildet. Wird das Verriegelungselement in die Betriebsstellung verschwenkt, so wird der Sperrriegel aus der Vertiefung herausbewegt, sodass die Drehbewegung des Nabenteils ermöglicht wird. Durch einen derartigen Formschluss ist eine besonders zuverlässige Verriegelung gewährleistet.

Ein erfindungsgemäßes Kraftfahrzeug, insbesondere Personenkraftwagen, umfasst eine erfindungsgemäße Verbindungsvorrichtung.

Die mit Bezug auf die erfindungsgemäße Verbindungsvorrichtung vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer und perspektivischer Darstellung einen Bereich einer Verbindungsvorrichtung gemäß einer Ausführungsform der Erfindung, wobei sich ein Verriegelungselement in einer Montagestellung befindet;
- Fig. 2: in schematischer und perspektivischer Darstellung die Verbindungsvorrichtung, wobei sich das Verriegelungselement in einer Betriebsstellung befindet; und
- Fig. 3 bis 6: in schematischer Darstellung eine Seitenansicht bzw. Schnittansicht durch die Verbindungsvorrichtung, wobei der Bewegungsvorgang von der Montagestellung in die Betriebsstellung näher erläutert wird.

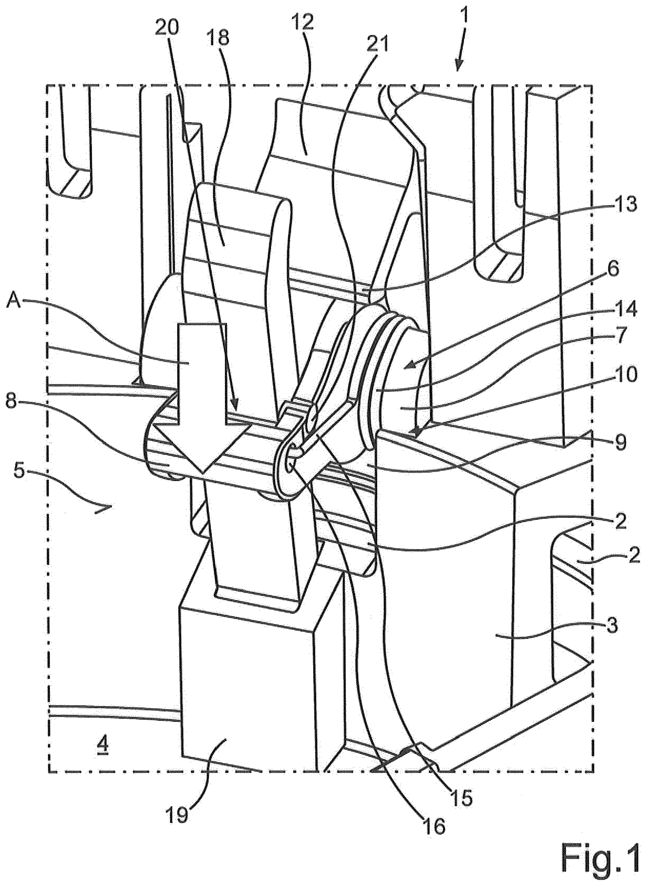

In Fig. 1 sind Teilkomponenten einer insgesamt mit 1 bezeichneten Verbindungsvorrichtung gemäß einer Ausführungsform der Erfindung gezeigt. Die Verbindungsvorrichtung 1 ist in Form eines Lenksäulenmoduls ausgebildet und umfasst ein als Gehäuse ausgebildetes ortsfestes Bauteil 2, welches zur ortsfesten Montage in einem Personenkraftwagen ausgebildet ist, nämlich an der Lenksäule bzw. an einem Gehäuse der Lenksäule. An dem ortsfesten Bauteil 2 ist ein Nabenteil 3 drehbar gelagert. Das Nabenteil 3 hat einen kreiszylindrischen Hohlraum 4, welcher durch einen radialen Innenumfang 5 des Nabenteils 3 radial nach außen begrenzt ist. Das Nabenteil 3 wird mit einem Lenkrad des Personenkraftwagens drehfest gekoppelt, wobei das Lenkrad, und genauer gesagt eine Nabe des Lenkrads, in den Hohlraum 4 axial eingeführt und hier auf eine Welle aufgesteckt wird.

In dem ortsfesten Bauteil 2 ist in an sich bekannter Weise eine Wickelfeder angeordnet, welche zum Übertragen von elektrischen Signalen zwischen dem Lenkrad einerseits und Einrichtungen andererseits dient, die ortsfest im Fahrzeug angeordnet sind. Diese Wickelfeder ist über nicht dargestellte Anschlüsse mit dem Lenkrad elektrisch koppelbar.

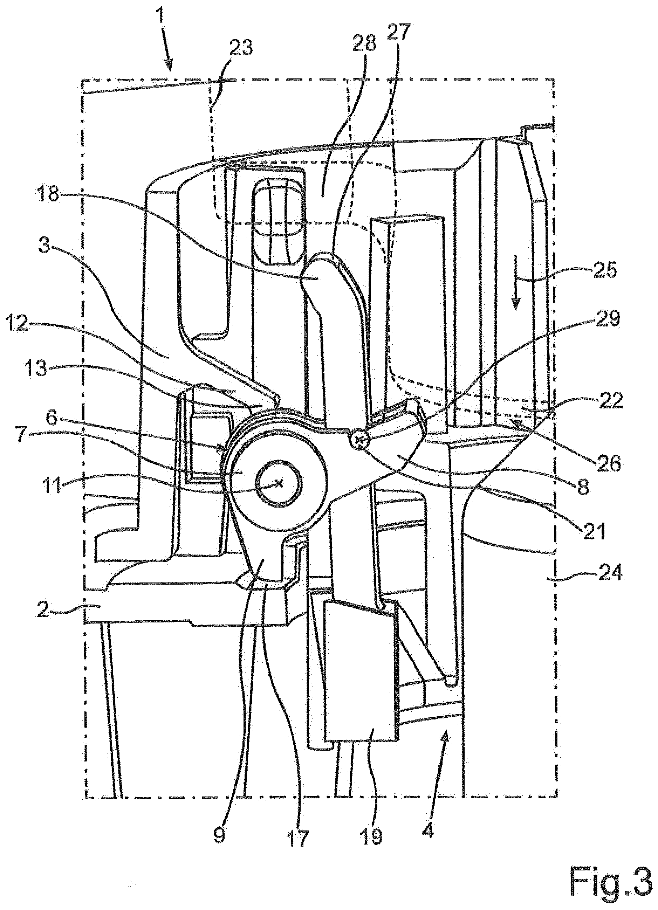

Bevor das Lenkrad in den Hohlraum 4 eingesetzt und somit fertig montiert wird, soll sichergestellt werden, dass sich das Nabenteil 3 relativ zum ortsfesten Bauteil 2 nicht drehen darf. Zu diesem Zwecke beinhaltet die Verbindungsvorrichtung 1 ein Verriegelungselement 6, welches insgesamt einstückig ausgebildet ist und einen kreiszylinderförmigen Grundkörper 7 aufweist, von welchem ein Betätigungsabschnitt 8 sowie separat dazu ein Sperrriegel 9 (vgl. Fig. 3 bis 6) radial und somit senkrecht zur Achse des Grundkörpers 7 nach außen abstehen. Der Grundkörper 7 ist in eine in dem Nabenteil 3 ausgebildete, als axiale Vertiefung (bezüglich der Drehachse des Nabenteils 3) ausgeführte Aufnahme 10 axial bezüglich der Drehachse des Nabenteils 3 eingesetzt und dort schwenkbar um eine Zylinderlängsachse 11 (vgl. Fig. 3 bis 6) des Grundkörpers 7 gelagert. Der Grundkörper 7 ist dabei gleitend in der Aufnahme 10 angeordnet. Um den Grundkörper 7 sicher in der Aufnahme 10 halten zu können, weist das Nabenteil 3 einen federnden Haltearm 12 auf, der in Form einer Lasche bzw. Zunge ausgebildet ist und in Richtung zum Hohlraum 4 weist. Ein freies Ende 13 des Haltearms 12 liegt an einem Außenumfang des zylindrischen Grundkörpers 7 an, sodass der Haltearm 12 den Grundkörper 7 in der Aufnahme 10 sicher hält. Der Haltearm 12 sorgt also für eine sichere radiale (bezüglich der Zylinderachse 11) Fixierung des zylindrischen Grundkörpers 7. Durch die Federwirkung des Haltearms 12 ist das Verriegelungselement 6 zerstörungsfrei lösbar in der Aufnahme 10 gelagert und kann somit demontiert werden.

Im Ausführungsbeispiel fungiert das Nabenteil 3 also auch als ein Lagerteil, an welchem das Verriegelungselement 6 schwenkbar gelagert ist.

Um den zylindrischen Grundkörper 7 ist eine Schenkelfeder 14 als Federelement gewickelt. Ein erster Schenkel 15 der Schenkelfeder 14 ist in einer Aussparung 16 fixiert, die in dem Betätigungsabschnitt 8 ausgebildet ist. Der erste Schenkel 15 ist somit an dem Betätigungsabschnitt 8 abgestützt. Ein in den Figuren nicht näher dargestellter zweiter Schenkel der Schenkelfeder 14 ist wiederum an dem Nabenteil 3 fixiert.

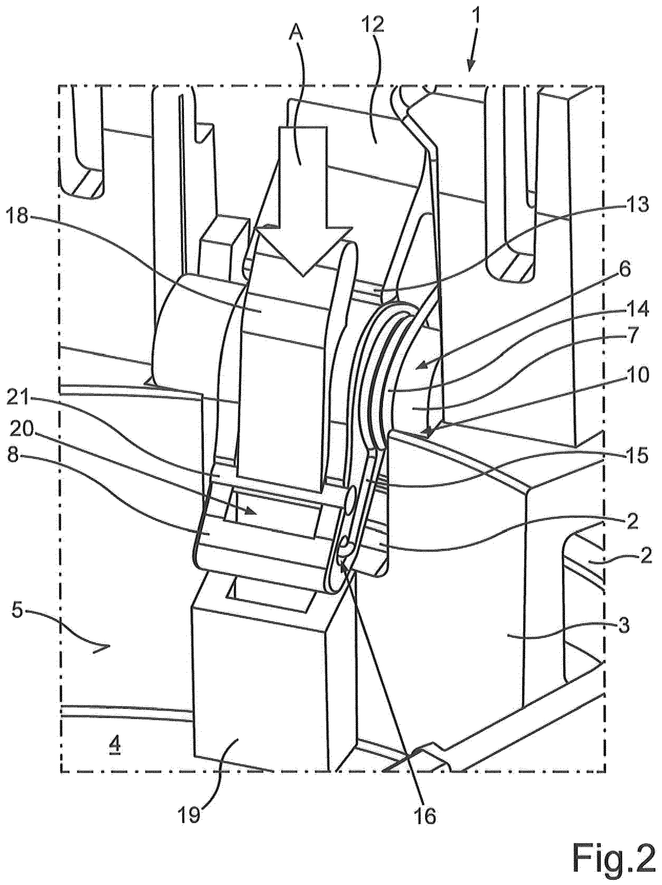

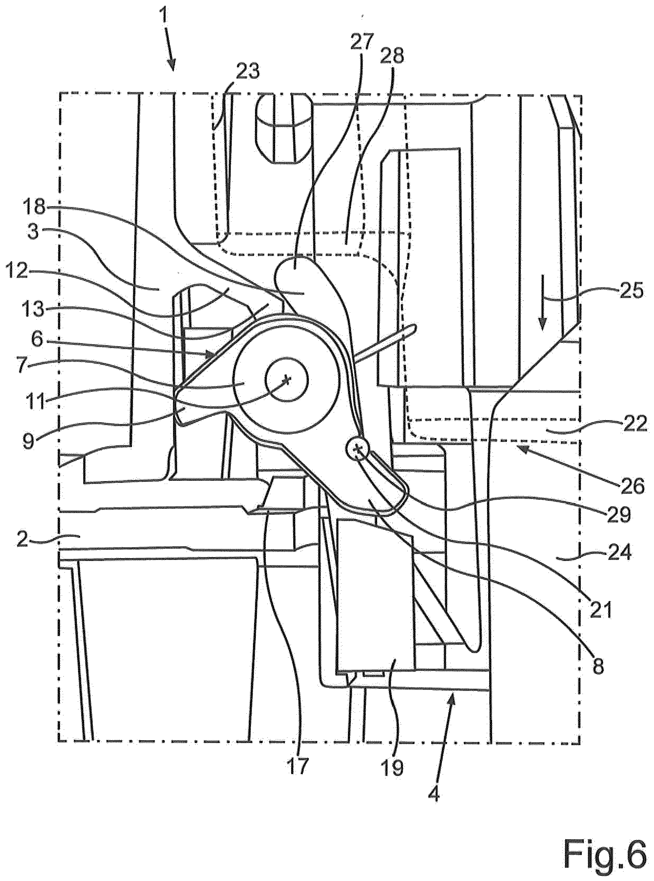

Das Verriegelungselement 6 wird beim Einsetzen der Nabe des Lenkrads in den Hohlraum 4 aus einer in Fig. 1 dargstellten Montagestellung gegen die Federkraft der Schenkelfeder 14 in eine in Fig. 2 gezeigte Betriebsstellung gemäß Pfeildarstellung A verschwenkt. Die Montagestellung stellt dabei eine Ruhestellung des Verriegelungselements 6 dar, in welcher sich der Sperrriegel 9 in einer im ortsfesten Bauteil 2 ausgebildeten Vertiefung 17 befindet. Der Sperrriegel 9 greift somit in der Montagestellung in die Vertiefung 17 hinein und blockiert somit die Drehbewegung des Nabenteils 3 relativ zum ortsfesten Bauteil 2, wie in Fig. 3 dargestellt. Beim Einsetzen der Lenkradnabe in den Hohlraum 4 wird das Verriegelungselement 6 in die Betriebsstellung verschwenkt, in welcher sich der Sperrriegel 9 außerhalb der Vertiefung 17 befindet und die Drehbewegung des Nabenteils 3 freigibt, wie in Fig. 6 gezeigt. In der Betriebsstellung gemäß Fig. 6 ist das Verriegelungselement 6 mit der Federkraft vorgespannt, sodass nach einem erneuten Abnehmen des Lenkrads das Verriegelungselement 6 selbsttätig wieder in die Montagestellung bewegt wird.

Mit weiterem Bezug auf Fig. 1 und 2 weist die Verbindungsvorrichtung 1 weiterhin einen länglich ausgeführten Stößel 18 auf, welcher abschnittsweise in einem Führungsteil 19 angeordnet und in diesem verschiebbar gelagert ist bzw. sitzt. Der Stößel 18 erstreckt sich mit seiner Haupterstreckungsrichtung im Wesentlichen entlang der Drehachse des Nabenteils 3 und ist auch entlang dieser Drehachse des Nabenteils 3 verschiebbar in dem Führungsteil 19 gelagert. Der Stößel 18 erstreckt sich dabei durch eine durchgängige Aussparung 20 hindurch, welche in dem Verriegelungselement 6 ausgebildet ist. Über einen Pin 21 ist der Stößel 18 außerdem an dem Verriegelungselement 6 angelenkt. Das Verriegelungselement 6 kann also relativ zum Stößel 18 verschwenkt werden. Der Pin 21 ist dabei an dem Stößel 18 angebracht und in einer korrespondierenden Öffnung des Verriegelungselements 6 angeordnet.

Der Stößel 18 ist in dem Führungsteil 19 so gelagert, dass auch eine gewisse Bewegungsfreiheit in radialer Richtung bezüglich der Drehachse des Nabenteils 3 möglich ist.

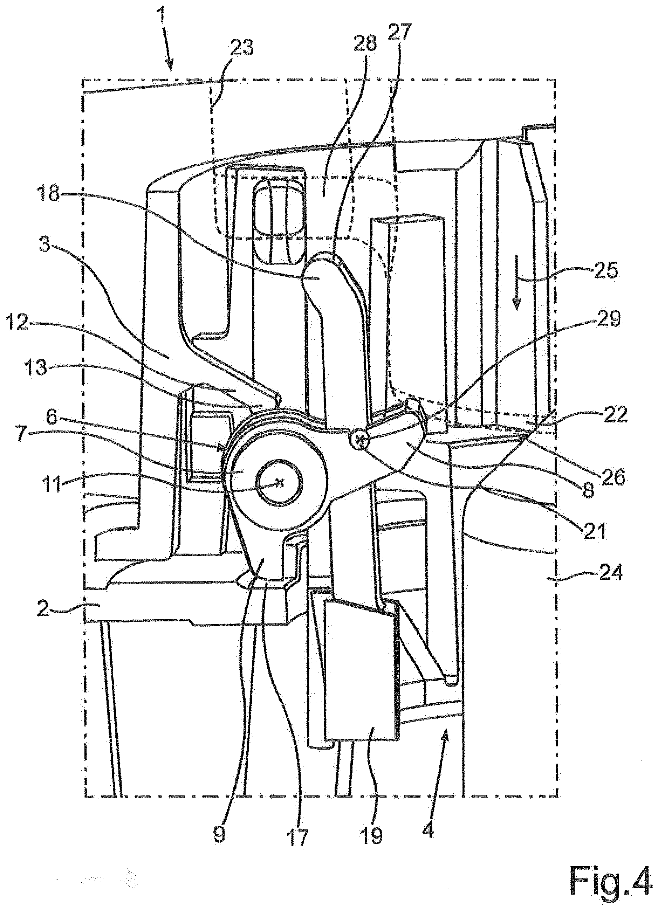

In den Fig. 3 bis 6 ist gezeigt, wie das Verriegelungselement 6 beim Einsetzen einer Nabe 22 eines insgesamt mit 23 bezeichneten und gestrichelt dargestellten Lenkrads in den Hohlraum 4 von der Montagestellung in die Betriebsstellung bewegt wird. Dabei wird die Nabe 22 des Lenkrads 23 auf eine Welle 24 einer Lenksäule des Kraftfahrzeugs aufgesteckt. Gemäß Fig. 3 beginnt der Montagevorgang des Lenkrads 23, bei welchem das Lenkrad 23 in axialer Richtung gemäß der Pfeildarstellung 25 auf die Lenksäule montiert wird. Der Betätigungsabschnitt 8 des Verriegelungselements 6 befindet sich noch in einem axialen Abstand zu einer Stirnseite 26 der Nabe 22. Wird das Lenkrad 23 gemäß der Pfeildarstellung 25 weiter in axialer Richtung bewegt, so wird der Betätigungsabschnitt 8 des Verriegelungselements 6 durch die axiale Stirnseite 26 der Nabe 22 betätigt und mit dieser in Kontakt gebracht, wie dies in Fig. 4 gezeigt ist. Hier befindet sich ein freies Ende 27 des Stößels 18 noch in einem axialen Abstand zu dem Lenkrad 23, nämlich zu einem Lenkradtopf 28, an welchem die Nabe 22 angeordnet ist.

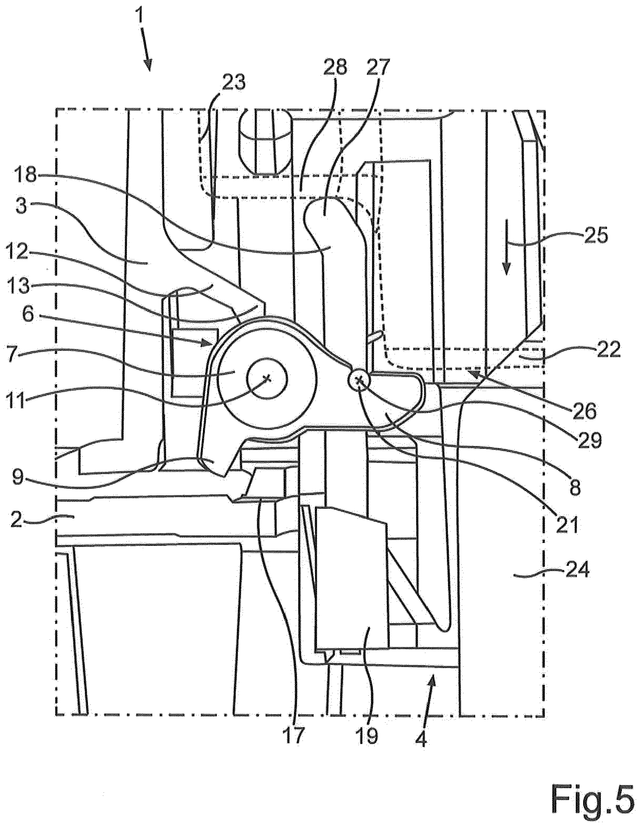

Bei weiterem Verschieben des Lenkrads 23 in axialer Richtung kommt das freie Ende 27 des Stößels 18 in Kontakt mit dem Lenkradtopf 28, wie dies in Fig. 5 gezeigt ist. Das Lenkrad 23 drückt nun den Stößel 18 und über den Stößel 18 auch das Verriegelungselement 6 weiter in Richtung zur Betriebsstellung hin. Der Betätigungsabschnitt 8 des Verriegelungselements 6 wird von der Stirnseite 26 der Nabe 22 weggebracht, sodass sich das Verriegelungselement 6 bzw. der Betätigungsabschnitt 8 in einem axialen Abstand zur Nabe 22 befindet. Beim weiteren Drücken des Lenkrads 23 erreicht das Verriegelungselement 6 seine Betriebsstellung gemäß Fig. 6, in welcher sich der Betätigungsabschnitt 8 in einem größeren Abstand von der Nabe 22 befindet und der Stößel 18 das Verriegelungselement 6 in der Betriebsstellung hält. Dabei bleibt der Stößel 18 in Kontakt mit der axialen Stirnfläche des Lenkradtopfs 28. Dieser Kontakt ist jedoch hinsichtlich der Geräuschentwicklung akzeptabel, da die axiale Stirnfläche des Lenkradtopfs 28 lackiert bzw. beschichtet werden kann. Außerdem wird zwischen dem freien Ende 27 des Stößels 18 einerseits und dem Lenkradtopf 28 andererseits lediglich ein punktueller Kontakt hergestellt, was weiterhin auch dadurch begünstigt werden kann, dass an dem freien Ende 27 des Stößels 18 eine Noppe oder dergleichen ausgebildet wird.

Wie aus den Fig. 3 bis 6 hervorgeht, bewegt sich der Stößel 18 insgesamt entlang der Welle 24 und somit in axialer Richtung bezüglich der Drehachse des Nabenteils 3. Außerdem ist auch eine geringfügige Schwenkbewegung des Stößels 18 erkennbar. Wie bereits ausgeführt, ist der Stößel 18 in dem Führungsteil 19 auch geringfügig in radialer Richtung und somit senkrecht zur Drehachse des Nabenteils 3 beweglich gelagert, um eine sichere Schwenkbewegung des Verriegelungselements 6 weg von der Nabe 22 zu ermöglichen.

Wie weiterhin aus den Fig. 4 bis 6 hervorgeht, ist der Stößel 18 an dem Verriegelungselement 6 um eine Schwenkachse 29 schwenkbar gelagert bzw. angelenkt, welche parallel zur Zylinderlängsachse 11 angeordnet ist, um welche der zylindrische Grundkörper 7 des Verriegelungselements 6 schwenkbar gelagert ist.

Durch den zusätzlichen Stößel 18 wird somit insgesamt erreicht, dass der Betätigungsabschnitt 8 des Verriegelungselements 6 in einem relativ großen Abstand zur Nabe 22 des Lenkrads 23 gehalten werden kann. Dadurch können im Betrieb des Kraftfahrzeugs Geräuschbildungen zuverlässig verhindert werden, da es zu keinem Kontakt zwischen dem Verriegelungselement 6 einerseits und dem Lenkrad 23 andererseits kommt.

## Patentansprüche

1. Verbindungsvorrichtung (1) zum Übertragen von elektrischen Signalen an und/oder von einem Lenkrad (23) eines Kraftfahrzeugs, mit einem ortsfesten Bauteil (2) zur ortsfesten Installation in dem Kraftfahrzeug, mit einem an dem ortsfesten Bauteil (2) drehbar gelagerten Nabenteil (3) zum Verbinden mit dem Lenkrad (23), und mit einem an einem Lagerteil (3) bewegbar gelagerten Verriegelungselement (6), welches bei dem Verbinden des Nabenteils (3) mit dem Lenkrad (23) aus einer Montagestellung, in welcher ein Sperrriegel (9) des Verriegelungselements (6) die Drehung des Nabenteils (3) relativ zum ortsfesten Bauteil (2) blockiert, gegen eine Federkraft eines Federelements (14) in eine Betriebsstellung bewegbar ist, in welcher die Drehung des Nabenteils (3) freigegeben ist, wobei die Verbindungsvorrichtung (1) einen relativ zum Verriegelungselement (6) bewegbar gelagerten Stößel (18) aufweist, welcher bei dem Verbinden des Nabenteils (3) mit dem Lenkrad (23) das Verriegelungselement (6) in die Betriebsstellung verbringt, in welcher das Verriegelungselement (6) durch den Stößel (18) in einem Abstand zu dem Lenkrad (23) gehalten ist, und das Verriegelungselement (6) zwischen der Montagestellung und der Betriebsstellung schwenkbar an dem Lagerteil (3) gelagert ist,
**dadurch gekennzeichnet, dass**
der Stößel (18) länglich ausgeführt ist und entlang seiner Haupterstreckungsrichtung bewegbar gelagert ist, wobei das Verriegelungselement (6) eine durchgängige Aussparung (20) aufweist, durch welche sich der Stößel (18) hindurch erstreckt.

2. Verbindungsvorrichtung (1) nach Anspruch 1,
**dadurch gekennzeichnet, dass**
bei dem Verbinden des Nabenteils (3) mit dem Lenkrad (23) das Verriegelungselement (6) zunächst unter Kontakt mit dem Lenkrad (23) mittels des Lenkrads (23) in eine Zwischenstellung, in welcher der Stößel (18) in Kontakt mit dem Lenkrad (23) gebracht ist, und anschließend mittels des Stößels (18) in die Betriebsstellung bewegbar ist.

3. Verbindungsvorrichtung (1) nach einem der vorhergehenden Ansprüche,
**dadurch gekennzeichnet, dass**
der Stößel (18) an und/oder in einem Führungsteil (19) verschiebbar gelagert ist.

4. Verbindungsvorrichtung (1) nach einem der vorhergehenden Ansprüche,
**dadurch gekennzeichnet, dass**
das Verriegelungselement (6) an dem Stößel (18) angelenkt ist.

5. Verbindungsvorrichtung (1) nach einem der vorhergehenden Ansprüche,
**dadurch gekennzeichnet, dass**
das Federelement (14) als Schenkelfeder (14) ausgebildet ist, welche um einen Grundkörper (7) des Verriegelungselements (6) gewickelt ist, wobei ein erster Schenkel (15) der Schenkelfeder (14) an dem Verriegelungselement (6) und ein zweiter Schenkel der Schenkelfeder (14) an dem Lagerteil (3) abgestützt sind.

6. Verbindungsvorrichtung (1) nach einem der vorhergehenden Ansprüche,
**dadurch gekennzeichnet, dass**
das Lagerteil (3) integral mit dem Nabenteil (3) ausgebildet ist, sodass das Verriegelungselement (6) an dem Nabenteil (3) gelagert, insbesondere schwenkbar gelagert, ist.

7. Verbindungsvorrichtung (1) nach einem der vorhergehenden Ansprüche,
**dadurch gekennzeichnet, dass**
das Lagerteil (3) eine Aufnahme (10) aufweist, in welche ein Grundkörper (7) des Verriegelungselements (6) eingesetzt ist.

8. Verbindungsvorrichtung (1) nach Anspruch 7,
**dadurch gekennzeichnet, dass**
das Lagerteil (3) einen federnd ausgebildeten Haltearm (12) aufweist, welcher an dem Grundkörper (7) des Verriegelungselements (6) anliegt und mittels welchem der Grundkörper (7) in der Aufnahme gehalten ist.

9. Verbindungsvorrichtung (1) nach einem der vorhergehenden Ansprüche,
**dadurch gekennzeichnet, dass**
das Verriegelungselement (6) zerstörungsfrei lösbar an dem Lagerteil (3) angeordnet ist.

10. Verbindungsvorrichtung (1) nach einem der vorhergehenden Ansprüche,
**dadurch gekennzeichnet, dass**
die Verbindungsvorrichtung (1) eine, insbesondere in dem ortsfesten Bauteil (2) ausgebildete, Vertiefung (17) aufweist, in welche der Sperrriegel (9) in der Montagestellung des Verriegelungselements (6) eingreift, um die Drehung des Nabenteils (3) zu blockieren.

11. Kraftfahrzeug mit einer Verbindungsvorrichtung (1) nach einem der vorhergehenden Ansprüche.

## Claims

1. Connecting device (1) for transmitting electrical signals to and/or from a steering wheel (23) of a motor vehicle, having a positionally fixed component (2) for positionally fixed installation in the motor vehicle, having a hub part (3) which is rotatably mounted on the positionally fixed component (2) and which serves for connection to the steering wheel (23), and having a locking element (6) which is movably mounted on a bearing part (3) and which, during the connection of the hub part (3) to the steering wheel (23), is movable counter to a spring force of a spring element (14) from an installation position, in which a blocking bar (9) of the locking element (6) blocks the rotation of the hub part (3) relative to the positionally fixed component (2), into an operating position, in which the rotation of the hub part (3) is enabled, wherein the connecting device (1) has a plunger (18) which is mounted movably relative to the locking element (6) and which, during the connection of the hub part (3) to the steering wheel (23), moves the locking element (6) into the operating position, in which the locking element (6) is held spaced apart from the steering wheel (23) by the plunger (18), and the locking element (6) is mounted on the bearing part (3) so as to be pivotable between the installation position and the operating position,
**characterized in that**
the plunger (18) is of elongate form and is mounted so as to be movable along its main direction of extent, wherein the locking element (6) has a through aperture (20) through which the plunger (18) extends.

2. Connecting device (1) according to Claim 1,
**characterized in that**
during the connection of the hub part (3) to the steering wheel (23), the locking element (6) is initially in contact with the steering wheel (23) and movable by way of the steering wheel (23) into an intermediate position in which the plunger (18) is brought into contact with the steering wheel (23), and said locking element is subsequently movable by way of the plunger (18) into the operating position.

3. Connecting device (1) according to one of the preceding claims,
**characterized in that**
the plunger (18) is displaceably mounted on and/or in a guide part (19).

4. Connecting device (1) according to one of the preceding claims,
**characterized in that**
the locking element (6) is articulated on the plunger (18).

5. Connecting device (1) according to one of the preceding claims,
**characterized in that**
the spring element (14) is in the form of a leg spring (14) which is coiled around a main body (7) of the locking element (6), wherein a first leg (15) of the leg spring (14) is supported on the locking element (6), and a second leg of the leg spring (14) is supported on the bearing part (3).

6. Connecting device (1) according to one of the preceding claims,
**characterized in that**
the bearing part (3) is formed integrally with the hub part (3), such that the locking element (6) is mounted, in particular pivotably mounted, on the hub part (3).

7. Connecting device (1) according to one of the preceding claims,
**characterized in that**
the bearing part (3) has a receptacle (10) into which a main body (7) of the locking element (6) is inserted.

8. Connecting device (1) according to Claim 7,
**characterized in that**
the bearing part (3) has a holding arm (12) of resilient form, which holding arm bears against the main body (7) of the locking element (6) and by means of which holding arm the main body (7) is held in the receptacle.

9. Connecting device (1) according to one of the preceding claims,
**characterized in that**
the locking element (6) is arranged on the bearing part (3) so as to be releasable in non-destructive fashion.

10. Connecting device (1) according to one of the preceding claims,
**characterized in that**
the connecting device (1) has a depression (17) which is formed in particular in the positionally fixed component (2) and into which, in the installation position of the locking element (6), the blocking bar (9) engages in order to block the rotation of the hub part (3).

11. Motor vehicle having a connecting device (1) according to one of the preceding claims.

## Revendications

1. Dispositif de raccordement (1) servant à transmettre des signaux électriques vers et/ou depuis un volant de direction (23) d'un véhicule automobile, comportant une partie fixe (2) servant à la fixation dans le véhicule automobile, une partie formant moyeu (3) montée à rotation sur la partie fixe (2) et destinée à être raccordée au volant de direction (23), et un élément de verrouillage (6) qui est monté de façon mobile sur une partie formant palier (3) et qui est apte à se déplacer, lors du raccordement de la partie formant moyeu (3) au volant de direction (23), d'une position de montage, à laquelle un boulon de blocage (9) de l'élément de verrouillage (6) bloque la rotation de la partie formant moyeu (3) par rapport à la partie fixe (2), à une position de fonctionnement à laquelle la rotation de la partie formant moyeu (3) est libérée, en s'opposant à une force de rappel d'un élément formant ressort (14), dans lequel le dispositif de raccordement (1) comporte un poussoir (18) qui est monté de manière mobile par rapport à l'élément de verrouillage (6) et qui fait passer, lors du raccordement de la partie formant moyeu (3) au volant de direction (23), l'élément de verrouillage (6) à la position de fonctionnement à laquelle l'élément de verrouillage (6) est maintenu par le poussoir (18) à une certaine distance du volant de direction (23) et l'élément de verrouillage (6) est monté de manière pivotante sur la partie formant moyeu (3) entre la position de montage et la position de fonctionnement, **caractérisé en ce que** le poussoir (18) est réalisé de manière longitudinale et est monté de façon mobile le long d'une direction d'extension principale, dans lequel l'élément de verrouillage (6) présente un évidement traversant (20) à travers lequel s'étend le poussoir (18).

2. Dispositif de raccordement (1) selon la revendication 1,
**caractérisé en ce que** l'élément de verrouillage (6) est tout d'abord mis en contact avec le volant de direction (23), lors du raccordement de la partie formant moyen (3) au volant de direction (23), au moyen du volant de direction (23) à une position intermédiaire à laquelle le poussoir (18) est mis en contact avec le volant de direction (23), puis peut être déplacé à la position de fonctionnement au moyen du poussoir (18).

3. Dispositif de raccordement (1) selon l'une des revendications précédentes,
**caractérisé en ce que** le poussoir (18) est monté de façon coulissante sur et/ou dans une partie de guidage (18) .

4. Dispositif de raccordement (1) selon l'une des revendications précédentes,
**caractérisé en ce que** l'élément de verrouillage (6) est articulé sur le poussoir (18).

5. Dispositif de raccordement (1) selon l'une des revendications précédentes,
**caractérisé en ce que** l'élément formant ressort (14) est réalisé sous la forme d'un ressort de torsion (14) qui est enroulé autour d'un corps de base (7) de l'élément de verrouillage (6), dans lequel une première branche (15) du ressort de torsion (14) est supportée sur l'élément de verrouillage (6) et une seconde branche du ressort de torsion (14) est supportée sur la partie formant palier (3).

6. Dispositif de raccordement (1) selon l'une des revendications précédentes,
**caractérisé en ce que** la partie formant palier (3) est réalisée solidaire de la partie formant moyeu (3) de manière à ce que l'élément de verrouillage (6) soit monté sur la partie formant moyeu (3), notamment de manière pivotante.

7. Dispositif de raccordement (1) selon l'une des revendications précédentes,
**caractérisé en ce que** la partie formant palier (3) présente un réceptacle (10) dans lequel est logé un corps de base (7) de l'élément de verrouillage (6).

8. Dispositif de raccordement (1) selon la revendication 7,
**caractérisé en ce que** la partie formant palier (3) présente un bras de support (12) réalisé de manière élastique, qui prend appui sur le corps de base (7) de l'élément de verrouillage (6) et au moyen duquel le corps de base (7) est maintenu dans le réceptacle.

9. Dispositif de raccordement (1) selon l'une des revendications précédentes,
**caractérisé en ce que** l'élément de verrouillage (6) est disposé sur la partie formant palier (3) de manière à ce qu'il puisse être séparé de façon non destructible.

10. Dispositif de raccordement (1) selon l'une des revendications précédentes,
**caractérisé en ce que** le dispositif de raccordement (1) comporte un renfoncement (17), notamment réalisé sous la forme d'une partie fixe (2), dans lequel le boulon de blocage (9) s'engage à la position de montage de l'élément de verrouillage (6) afin de bloquer la rotation de la partie formant moyeu (3).

11. Véhicule automobile comportant un dispositif de raccordement (1) selon l'une des revendications précédentes.
